# EUROPEAN PATENT APPLICATION

(11) **EP 4 566 842 A1**
(43) Date of publication of application: **11.06.2025**
(21) Application number: 24211074.0
(22) Date of filing: 06.11.2024
(51) Int. Cl.: B60C 9/10, B60C 11/03, B60C 11/11, B60C 11/13, B60C 9/09

(54) **TIRE FOR MOTORCYCLES**

(30) Priority: 06.12.2023 JP 2023206360
(71) Applicant: Sumitomo Rubber Industries, Ltd., Kobe-shi, Hyogo 651-0072 (JP)
(72) Inventor: HINAMI, Yukiko, KOBE-SHI, 651-0072 (JP)
(74) Representative: Plasseraud IP

(57) **Abstract**

Provided is a tire for motorcycles that is capable of having a further improvement in on-road performance and off-road performance. A tire 1 for motorcycles has a bias structure. Each of two carcass plies includes a plurality of carcass cords inclined at an angle of not less than 20 degrees and less than 70 degrees with respect to a tire circumferential direction. A tread portion 2 includes a plurality of axial grooves 11 extending between tread ends Te on both sides, and crown blocks 15 each formed between the axial grooves 11 adjacent in the tire circumferential direction. A length Wc in a tire axial direction of each crown block 15 is not less than 30% of a tread development width TW.

## Description

### BACKGROUND OF THE INVENTION

### Field of the Invention

The present invention relates to tires for motorcycles.

### Background Art

Japanese Laid-Open Patent Publication No. 2023-102628 describes a pneumatic tire for motorcycles in which a crown block array is provided in a tread portion. The crown block array is formed such that gap distances in the tire circumferential direction between adjacent crown blocks in the tire circumferential direction include a first distance and a second distance different from the first distance. In addition, the centroid of the tread surface of each crown block is located at a distance away from the tire equator in the tire axial direction.

Such a pneumatic tire for motorcycles is considered to be suitable for running on tracks in which on-road and off-road tracks coexist. In recent years, there has been a demand for further improvement in on-road cornering stability (hereinafter referred to as "on-road performance") and off-road cornering stability (hereinafter referred to as "off-road performance").

The present invention has been made in view of the above-described problem, and an object of the present invention is to provide a tire for motorcycles that is capable of having a further improvement in on-road performance and off-road performance.

### SUMMARY OF THE INVENTION

The present invention is directed to a tire for motorcycles including a tread portion and a carcass having a bias structure, wherein the carcass includes at least two carcass plies, the two carcass plies each include a plurality of carcass cords inclined at an angle of not less than 20 degrees and less than 70 degrees with respect to a tire circumferential direction, the carcass cords of the two carcass plies are inclined in opposite directions, the tread portion includes a plurality of axial grooves extending between tread ends on both sides, and crown blocks each formed between the axial grooves adjacent in the tire circumferential direction, and a length in a tire axial direction of each crown block is not less than 30% of a tread development width.

As a result of adopting the above configuration, the tire for motorcycles according to the present invention is capable of having a further improvement in on-road performance and off-road performance.

### BRIEF DESCRIPTION OF THE DRAWINGS

FIG. 1 is a development view of a tread portion of a tire for motorcycles according to one embodiment of the present invention;
FIG. 2(A) is a cross-sectional view taken along a line A-A in FIG. 1;
FIG. 2(B) is a development view of carcass plies;
FIG. 3 is a development view of the tread portion;
FIG. 4 is a cross-sectional view taken along a line B-B in FIG. 3;
FIG. 5 is a development view of the tread portion; and
FIG. 6 is a development view of a tread portion according to another embodiment.

### DETAILED DESCRIPTION

Hereinafter, an embodiment of the present invention will be described with reference to the drawings. The drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

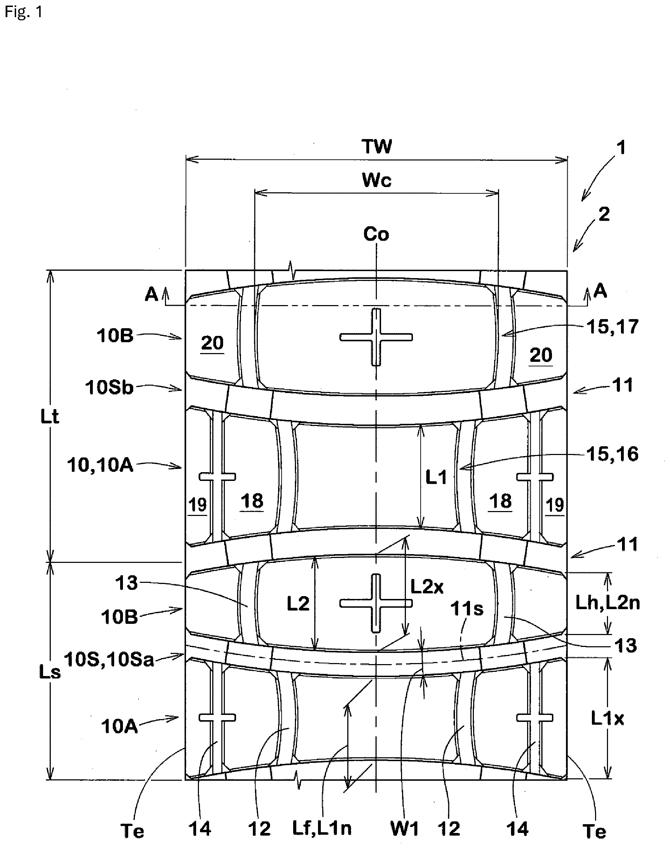

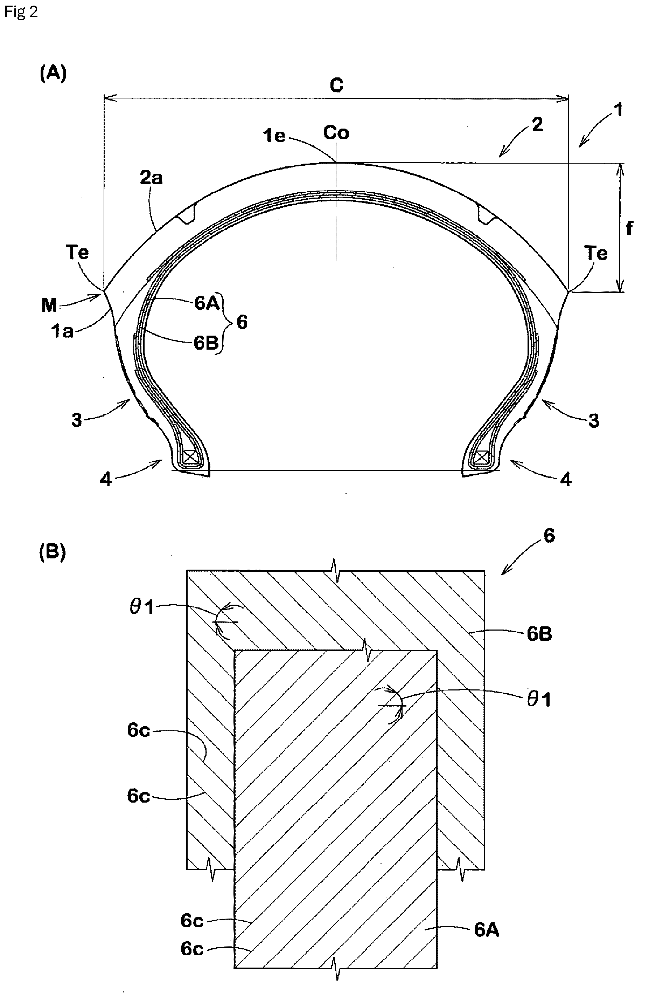

FIG. 1 is a development view of a tread portion 2 of a tire 1 for motorcycles (hereinafter sometimes referred to as a "tire") according to one embodiment of the present invention. FIG. 2(A) is a cross-sectional view taken along a line A-A in FIG. 1. FIGS. 1 and 2(A) show a pneumatic tire capable of running on on-road and off-road tracks as a preferable embodiment. The tire 1 shown in FIGS. 1 and 2(A) is suitable for a front tire for motorcycles.

In the present specification, unless otherwise specified, dimensions and the like of components of the tire 1 are values measured in a standardized state. In the case where the tire 1 is a pneumatic tire, the "standardized state" is a state where the tire 1 is fitted on a standardized rim (not shown) and inflated to a standardized internal pressure and no load is applied to the tire 1.

The "standardized rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIGS. 1 and 2(A), the tire 1 includes the tread portion 2 and a carcass 6. The carcass 6 includes at least two carcass plies 6A and 6B.

FIG. 2(B) is a development view of the carcass plies 6A and 6B. As shown in FIG. 2(B), each of the two carcass plies 6A and 6B includes a plurality of carcass cords 6c that are inclined at an angle θ1 of not less than 20 degrees and less than 70 degrees with respect to the tire circumferential direction. The carcass cords 6c of the two carcass plies 6A and 6B are inclined in opposite directions. Thus, the tire 1 of the present invention has a bias structure. As a result, the entire tire 1 can bend, and therefore, during cornering, the difference in outer diameter between inner and outer portions in the tire axial direction of the ground contact surface increases, resulting in a great lateral force (centripetal force). In addition, in the bias structure, which allows the entire tire to bend, the difference in stiffness feeling between a portion with a groove and a portion without a groove in the tread portion 2 is reduced, for example. Therefore, even when the camber angle of the tire 1 is changed, a sharp change in grip can be reduced. Therefore, on-road performance and off-road performance are improved. The angle θ1 of the carcass cords 6c of the carcass plies 6A and 6B is preferably not greater than 50 degrees and more desirably not greater than 40 degrees.

As shown in FIG. 1, the tread portion 2 includes a plurality of axial grooves 11 extending between tread ends Te and Te on both sides, and crown blocks 15 formed between adjacent axial grooves 11 in the tire circumferential direction. For the axial groove 11 extending between the tread ends Te and Te, mud stuck in the axial groove 11 can be easily removed during off-road running, and therefore, the axial groove 11 can exhibit a high edge effect. As a result, off-road performance is improved. In the present specification, each tread end Te corresponds to an end of the ground contact surface of the tread portion 2 during cornering at a maximum camber angle. The tread end Te is, for example, located at a tire maximum width position M (shown in FIG. 2(A)). In the present specification, the tire maximum width position M is a position protruding furthest outward in the tire axial direction on an imaginary outer surface specified, excluding protrusions such as letters and rim protectors provided on an outer surface 1a of the tire 1.

A length Wc in the tire axial direction of each crown block 15 is not less than 30% of a tread development width TW. Such a crown block 15 can reduce a sharp decrease in stiffness during an early stage of cornering when the camber angle is relatively small, thereby maintaining good transient characteristics. Therefore, the tire for motorcycles of the present invention is capable of having a further improvement in on-road performance and off-road performance. If the length Wc of the crown block 15 is excessively large, the stiffness of the tread portion 2 is excessively increased, so that the entire tire may be incapable of bending. Therefore, the length Wc of the crown block 15 is preferably not less than 35% of the tread development width TW, and is preferably not greater than 70% and more preferably not greater than 65% of the tread development width TW. In the present specification, the tread development width TW is the distance between the tread ends Te and Te in the tire axial direction when the tread portion 2 is developed on a plane.

As shown in FIG. 2(A), for the tire 1, the ratio (f/C) of a length f in the tire radial direction between the tire maximum width position M and an outer end 1e in the tire radial direction of the tire 1 to a tire cross-sectional width C is preferably not less than 0.25 and is preferably not greater than 0.6 and further preferably not greater than 0.5. Since the ratio (f/C) is not less than 0.25, the entire tire more easily bends, and a lateral force is more easily obtained during cornering. In addition, since the ratio (f/C) is not greater than 0.6, running is stable during an early stage of cornering. In the present specification, the tire cross-sectional width C is a distance in the tire axial direction at the tire maximum width position M. The outer end 1e of the tire 1 is specified based on a tread surface 2a of the tread portion 2 on a tire equator Co. If a groove or the like is provided on the tire equator Co, the outer end 1e is specified based on an imaginary tread surface (not shown) obtained by filling the groove or the like.

The tire 1 includes a pair of sidewall portions 3 that are connected to both sides in the tire axial direction of the tread portion 2, and a pair of bead portions 4 that are connected to the respective inner sides in the tire radial direction of the sidewall portions 3. The carcass plies 6A and 6B each extend toroidally between the bead portions 4 on both sides, for example.

As shown in FIG. 1, the tread portion 2 includes land portions 10 each demarcated by adjacent axial grooves 11 in the tire circumferential direction. The land portions 10 are formed between the tread ends Te and Te on both sides. The land portions 10 also include first land portions 10A and second land portions 10B. In this embodiment, a length L1 in the tire circumferential direction of the first land portion 10A increases from the tire equator Co toward the tread ends Te on both sides. For example, the length L1 of the first land portion 10A continuously increases from the tire equator Co toward the tread ends Te on both sides. In this embodiment, a length L2 in the tire circumferential direction of the second land portion 10B decreases from the tire equator Co toward the tread ends Te on both sides. For example, the length L2 of the second land portion 10B continuously decreases from the tire equator Co toward the tread ends Te on both sides. The first land portions 10A and the second land portions 10B are, for example, alternately provided in the tire circumferential direction.

In this embodiment, a smallest value Lf of the length L1 of the first land portion 10A is larger than a smallest value Lh of the length L2 of the second land portion 10B. In other words, the length Lf in the tire circumferential direction of the first land portion 10A on the tire equator Co is larger than the length Lh in the tire circumferential direction of the second land portion 10B at the tread end Te. As a result, the stiffness of the first land portion 10A in the vicinity of the tire equator Co, which is brought into contact with the ground during an early stage of cornering having many opportunities to run, is maintained high, resulting in an improvement in on-road performance and off-road performance.

The ratio (L1n/L1x) of a smallest value L1n to a greatest value L1x of the length in the circumferential direction of each first land portion 10A is preferably not less than 0.60 and further preferably not less than 0.65 and is preferably not greater than 0.80 and further preferably not greater than 0.75. The ratio (L2n/L2x) of a smallest value L2n to a greatest value L2x of the length in the tire circumferential direction of each second land portion 10B is preferably not less than 0.50 and further preferably not less than 0.55 and is preferably not greater than 0.70 and further preferably not greater than 0.65.

A pair of a first land portion 10A and a second land portion 10B adjacent to each other in the tire circumferential direction is referred to as a land portion group 10S. Adjacent land portion groups 10Sa and 10Sb in the tire circumferential direction form a pitch variation, i.e., the land portion groups 10Sa and 10Sb have different lengths in the tire circumferential direction. The ratio (Ls/Lt) of a length Ls in the tire circumferential direction of the land portion group 10Sa to a length Lt in the tire circumferential direction of the land portion group 10Sb is preferably not less than 60% and further preferably not less than 65% and is preferably not greater than 96% and further preferably not greater than 92%. For the ratio (Ls/Lt), the larger one of the length Ls in the tire circumferential direction of the land portion group 10Sa and the length Lt in the tire circumferential direction of the land portion group 10Sb is the denominator.

In this embodiment, the crown blocks 15 include first crown blocks 16, and second crown blocks 17 that are adjacent to the respective first crown blocks 16 in the tire circumferential direction and have a larger length in the tire axial direction greater than the first crown blocks 16. In this embodiment, the first crown blocks 16 are provided in the first land portions 10A. The second crown blocks 17 are, for example, provided in the second land portions 10B.

In addition, in this embodiment, the tread portion 2 includes first crown circumferential grooves 12 that demarcate the first crown blocks 16, and second crown circumferential grooves 13 that demarcate the second crown blocks 17. The first crown circumferential grooves 12 and the second crown circumferential grooves 13 connect adjacent axial grooves 11 in the tire circumferential direction, for example. In this embodiment, the first crown circumferential grooves 12 and the second crown circumferential grooves 13 are alternately provided in the tire circumferential direction. In this embodiment, the first crown circumferential grooves 12 and the second crown circumferential grooves 13 are provided on both sides in the tire axial direction of the tire equator Co. In this embodiment, the tread portion 2 is bilaterally symmetric with respect to the tire equator Co as an axis of symmetry.

Furthermore, the tread portion 2 includes shoulder circumferential grooves 14 that are located outward in the tire axial direction of the first crown circumferential grooves 12. In this embodiment, the shoulder circumferential grooves 14 are provided in the first land portions 10A and connect adjacent axial grooves 11 and 11 in the tire circumferential direction.

As a result, each first land portion 10A further includes a pair of middle blocks 18 demarcated by the first crown circumferential grooves 12 and the shoulder circumferential grooves 14, and a pair of first shoulder blocks 19 demarcated by the shoulder circumferential grooves 14 and the tread ends Te. Each second land portion 10B further includes a pair of second shoulder blocks 20 demarcated by the second crown circumferential grooves 13 and the tread ends Te.

For example, each axial groove 11 extends in the shape of an arc that is convex on one of the sides in the tire circumferential direction. In this embodiment, a groove width center line 11s of the axial groove 11 extends in the shape of an arc that is convex on one of the sides in the tire circumferential direction. A groove width W1 of the axial groove 11 is preferably not less than 20% and further preferably not less than 30%, and is preferably not greater than 50% and further preferably not greater than 40%, of a length (the smallest value L1n) in the tire circumferential direction of a land portion 10 (first land portion 10A) adjacent to the axial groove 11. Since the groove width W1 of the axial groove 11 is not less than 20% of the length in the tire circumferential direction of the land portion 10, mud stuck in the axial groove 11 can be smoothly removed. Since the groove width W1 of the axial groove 11 is not greater than 50% of the length in the tire circumferential direction of the land portion 10, a significant decrease in the stiffness of the tread portion 2 can be suppressed. In the present specification, each of the groove widths of grooves including the axial groove 11 is a length orthogonal to the groove width center line.

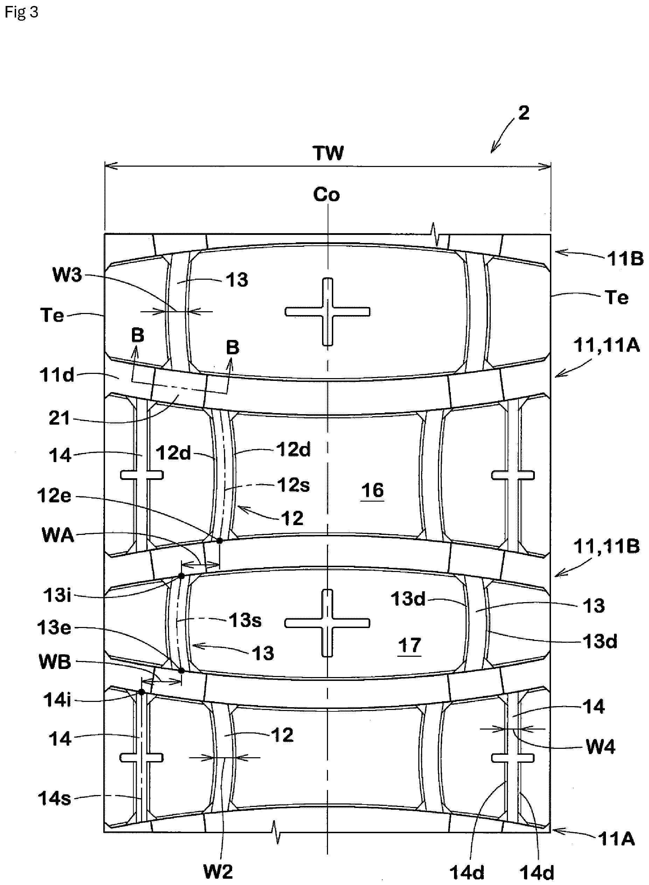

FIG. 3 is a development view of the tread portion 2. As shown in FIG. 3, the axial grooves 11 include first axial grooves 11A extending in the shape of an arc that is convex in a first tire circumferential direction, and second axial grooves 11B extending in the shape of an arc that is convex in a direction opposite to that of the first axial grooves 11A, for example. In this embodiment, the first axial grooves 11A and the second axial grooves 11B are alternately arranged in the tire circumferential direction.

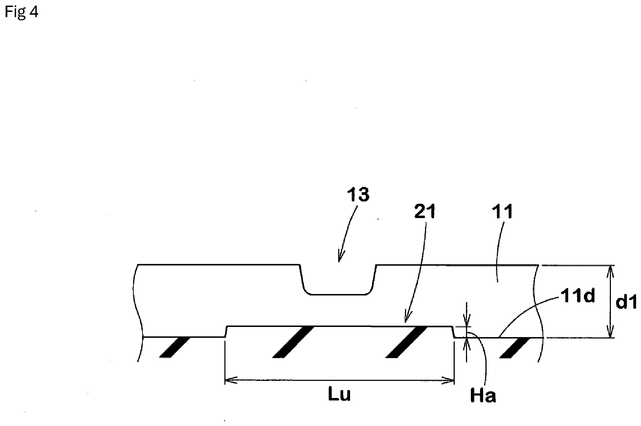

FIG. 4 is a cross-sectional view taken along a line B-B in FIG. 3. As shown in FIGS. 3 and 4, each axial groove 11 includes a tie bar 21 that is a raised portion of a groove bottom 11d. The tie bar 21 suppresses deformation of the axial groove 11 during cornering and serves to maintain good transient characteristics.

The tie bar 21 is, for example, connected to the second crown circumferential groove 13. Such a tie bar 21 enhances the stiffness of a portion of the tread portion 2 that is easily deformed due to a groove, resulting in suppression of a deterioration in transient characteristics during cornering. In this embodiment, the tie bar 21 is connected to both sides in the longitudinal direction of the second crown circumferential grooves 13.

In this embodiment, the tie bar 21 is located outward in the tire axial direction of the first crown circumferential groove 12. The tie bar 21 is, for example, provided between the first crown circumferential groove 12 and the shoulder circumferential groove 14. In this embodiment, the tie bar 21 is provided without overlapping a groove width center line 12s of the first crown circumferential groove 12 or a groove width center line 14s of the shoulder circumferential groove 14 in the tire axial direction. Such a tie bar 2 does not interfere with smooth flow of mud from the first crown circumferential groove 12 and the shoulder circumferential groove 14 to the axial groove 11.

In order to allow smooth removal of mud stuck in the axial groove 11 while suppressing a decrease in the stiffness of the tread portion 2, a length Lu in the tire axial direction of the tie bar 21 is preferably not less than 5% and further preferably not less than 7% of the tread development width TW, and is preferably not greater than 15% and further preferably not greater than 13% of the tread development width TW. Similarly, a raised height Ha of the tie bar 21 is preferably not less than 10% and further preferably not less than 15% of a groove depth d1 of the axial groove 11, and is preferably not greater than 30% and further preferably not greater than 25% of the groove depth d1 of the axial groove 11.

As shown in FIG. 3, each first crown circumferential groove 12 extends in the shape of an arc that is convex inward in the tire axial direction, for example. As a result, a high stiffness in the tire axial direction (lateral stiffness) of the first crown block 16 can be ensured in the vicinity of both sides in the tire circumferential direction of the first crown block 16, where the lateral stiffness is likely to be low, resulting in an improvement in running performance during an early stage of cornering. In this embodiment, groove edges 12d and 12d on both sides of the first crown circumferential groove 12 extend in the shape of an arc that is convex inward in the tire axial direction.

In this embodiment, each first crown circumferential groove 12 and each second crown circumferential groove 13 are located at different positions (misaligned) in the tire axial direction. As a result, the misalignment in the tire axial direction is provided at a portion in which stiffness is reduced due to a groove, and therefore, a deterioration in transient characteristics during cornering can be suppressed, which allows stable cornering. If the first crown circumferential groove 12 and the second crown circumferential groove 13 are excessively misaligned in the tire axial direction, a difference in stiffness in the tire axial direction between the first crown block 16 and the second crown block 17 is increased, which may lead to a deterioration in transient characteristics during cornering. Therefore, a misalignment length WA in the tire axial direction between the first crown circumferential groove 12 and the second crown circumferential groove 13 is preferably not less than 10% and further preferably not less than 15% a groove width W2 of the first crown circumferential groove 12, and is preferably not greater than 220% and further preferably not greater than 200% of the groove width W2 of the first crown circumferential groove 12. The misalignment length WA is specified by one end 12e in the tire circumferential direction of the groove width center line 12s of the first crown circumferential groove 12, and one end 13i (on the opposite side of the axial groove 11 from the end 12e) in the tire circumferential direction of a groove width center line 13s of the second crown circumferential groove 13.

The groove width W2 of the first crown circumferential groove 12 and the groove width W3 of the second crown circumferential groove 13 are preferably not less than 4% of the tread development width TW, and are preferably not greater than 15% and further preferably not greater than 10% of the tread development width TW. Since the groove widths W2 and W3 are each not less than 4% of the tread development width TW, mud stuck in the axial groove 11 can be smoothly removed through the crown circumferential grooves 12 and 13. Since the groove widths W2 and W3 are each not greater than 15% of the tread development width TW, stiffness can be maintained in the vicinity of each of the crown circumferential grooves 12 and 13, resulting in suppression of a deterioration in transient characteristics. In this embodiment, the groove width W2 of the first crown circumferential groove 12 is the same as the groove width W3 of the second crown circumferential groove 13. The term "same" is intended to encompass not only the case in which the difference in groove width (W2 - W3) is 0 mm, but also the case in which the absolute value |W2 - W31 of the difference in groove width is not greater than 2 mm.

Each second crown circumferential groove 13 extends in the shape of an arc that is convex toward the tread end Te, for example. In other words, the second crown circumferential groove 13 extends in the shape of an arc that is convex in a direction opposite to that of the first crown circumferential groove 12. Such a first crown circumferential groove 12 and second crown circumferential groove 13 exhibit an edge effect in a number of directions, resulting in stable cornering performance. In this embodiment, groove edges 13d and 13d on both sides of the second crown circumferential groove 13 extend in the shape of an arc that is convex toward the tread end Te.

In this embodiment, each shoulder circumferential groove 14 extends in the tire circumferential direction. The shoulder circumferential groove 14 extends parallel to the tire circumferential direction, for example. The shoulder circumferential groove 14 is located outward in the tire axial direction of the first crown circumferential groove 12, and therefore, groove edges 14d thereof extending in the longitudinal direction exhibit a great edge effect during cornering. In this embodiment, the shoulder circumferential groove 14 has a groove width W4 smaller than the groove width W2 of the first crown circumferential groove 12.

In this embodiment, each shoulder circumferential groove 14 and each second crown circumferential groove 13 are located at different positions (misaligned) in the tire axial direction. As a result, the misalignment in the tire axial direction is provided at a portion in which stiffness is reduced due to a groove, and therefore, a deterioration in transient characteristics during cornering can be suppressed, which allows stable cornering. The shoulder circumferential groove 14 is, for example, located outward in the tire axial direction of the second crown circumferential groove 13. A misalignment length WB in the tire axial direction between the shoulder circumferential groove 14 and the second crown circumferential groove 13 is preferably not less than 1.5 times and further preferably not less than 1.7 times the groove width W3 of the second crown circumferential groove 13, and is preferably not greater than 4.0 times and further preferably not greater than 3.5 times the groove width W3 of the second crown circumferential groove 13. The misalignment length WB is specified by one end 13e in the tire circumferential direction of the groove width center line 13s of the second crown circumferential groove 13 and one end 14i (on the opposite side of the axial groove 11 from the end 13e) in the tire circumferential direction of the groove width center line 14s of the shoulder circumferential groove 14.

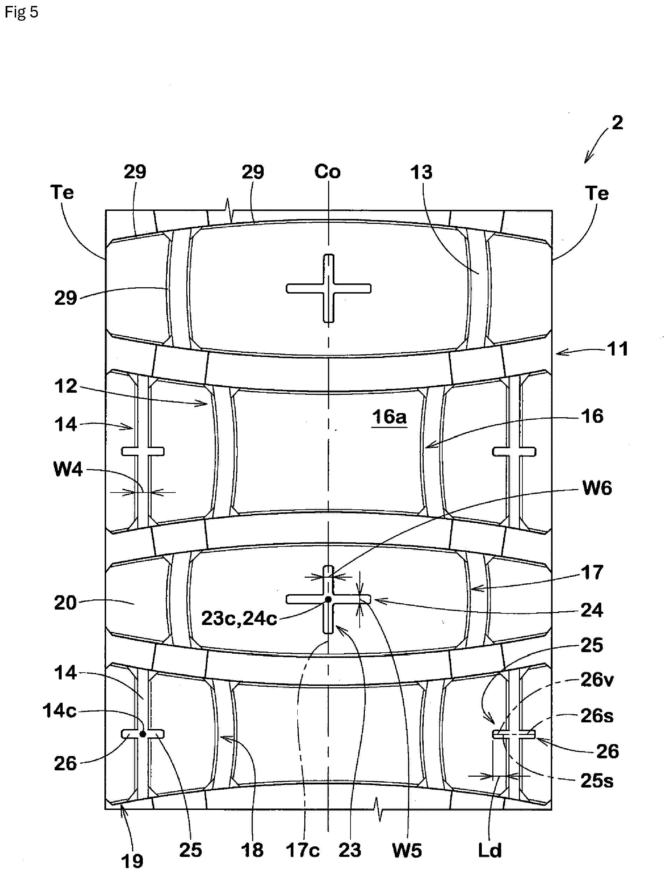

FIG. 5 is a development view of the tread portion 2. As shown in FIG. 5, each first crown block 16 is formed as a plain block having no groove or sipe formed on a tread surface 16a thereof. Such a first crown block 16 contributes to stable on-road cornering performance. In the present specification, the term "sipe" refers to a slit-like recess having a width of less than 1.5 mm, and is definitively distinguished from grooves, which have a width of not less than 1.5 mm. The grooves include the axial grooves 11, the circumferential grooves 12 to 14, and narrow grooves 23 to 26 described later.

In this embodiment, each second crown block 17 includes a circumferential narrow groove 23 extending in the tire circumferential direction, and an axial narrow groove 24 extending in the tire axial direction. The circumferential narrow groove 23 and the axial narrow groove 24 are orthogonal to each other. Such a circumferential narrow groove 23 and axial narrow groove 24 appropriately reduce the stiffness of the second crown block 17, which has a relatively large length in the tire axial direction, and serve to increase the difference in outer diameter between inner and outer portions in the tire axial direction of the ground contact surface during cornering. Both ends of each of the circumferential narrow groove 23 and the axial narrow groove 24 are included in the second crown block 17. A groove width W5 of the circumferential narrow groove 23 and a groove width W6 of the axial narrow groove 24 are, for example, smaller than the groove width W4 of the shoulder circumferential groove 14.

The circumferential narrow groove 23 is, for example, located at a middle 17c in the tire axial direction of the second crown block 17. In this embodiment, the circumferential narrow groove 23 is located on the tire equator Co. The circumferential narrow groove 23 is, for example, located at a center 24c in the longitudinal direction of the axial narrow groove 24. In this embodiment, the axial narrow groove 24 is located at a center 23c in the longitudinal direction of the circumferential narrow groove 23.

Each middle block 18 is provided with a middle axial narrow groove 25 that extends from the shoulder circumferential groove 14 toward the tire equator Co and terminates within the middle block 18. Such a middle axial narrow groove 25 increases a shear force during off-road running. The middle axial narrow groove 25 is, for example, located at a center 14c in the longitudinal direction of the shoulder circumferential groove 14.

Each first shoulder block 19 is provided with a shoulder axial narrow groove 26 that extends from the shoulder circumferential groove 14 toward the tread end Te and terminates within the first shoulder block 19. The shoulder axial narrow groove 26 is, for example, located at the center 14c in the longitudinal direction of the shoulder circumferential groove 14.

The shoulder axial narrow groove 26, together with the middle axial narrow groove 25, forms a single imaginary axial groove via the shoulder circumferential groove 14.

In the present specification, the term "form a single imaginary axial groove" means that an imaginary line 26v obtained by extending a groove width center line 26s of the shoulder axial narrow groove 26 coincides with a groove width center line 25s of the middle axial narrow groove 25. The term "form a single imaginary axial groove" also means that the imaginary line 26v coincides with the middle axial narrow groove 25 over 50% or more of a length Ld in the tire axial direction of the middle axial narrow groove 25.

Each second shoulder block 20 is formed as a plain block as with the first crown block 16.

Around each block 16 to 20, a chamfered portion 29 obtained by cutting a block edge (not shown) is provided. The chamfered portions 29 are, for example, provided adjacent to the axial grooves 11 and the circumferential grooves 12 to 14. Such chamfered portions 29 suppress the occurrence of chips or cracks of the blocks 16 to 20 and serve to maintain high cornering performance.

A sea/land ratio S/L of the tread portion 2 is preferably not less than 15% and further preferably not less than 20%, and is preferably not greater than 50% and further preferably not greater than 40%. Since the sea/land ratio S/L is not less than 15%, a shear force on mud can be increased. Since the sea/land ratio S/L is not greater than 50%, the stiffness of the tread portion 2 can be maintained high. In the present specification, the sea/land ratio S/L is the ratio of a sum S of the surface areas of the grooves and the sipes to a total area L of the tread surface 2a (shown in FIG. 1) of the tread portion 2. The sum S is the difference (T - L) between a total area T of an imaginary tread surface (not shown) obtained by filling all grooves and sipes and the total area L of the tread surface 2a.

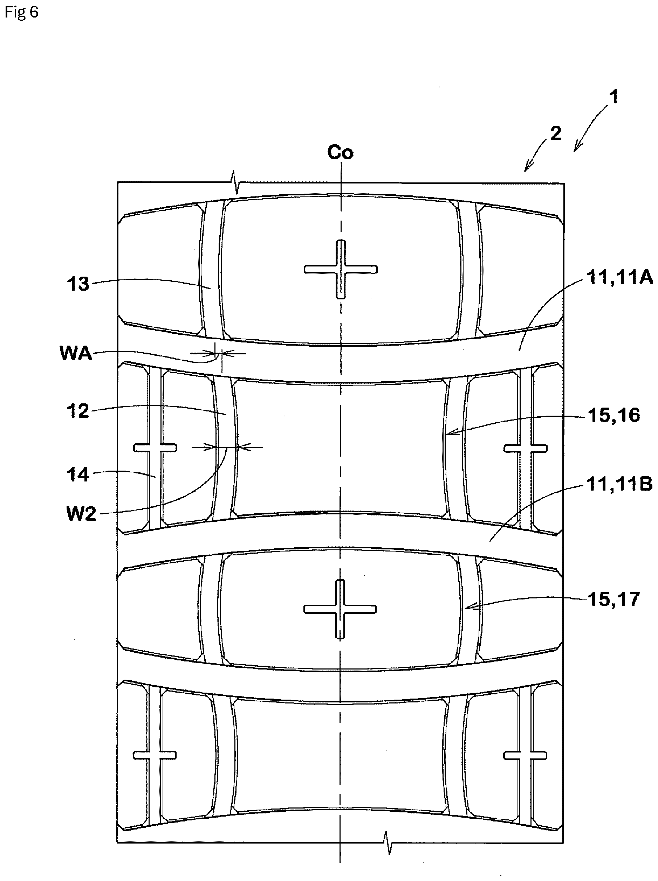

FIG. 6 is a development view of a tread portion 2 according to another embodiment. A tire 1 shown in FIG. 6 is, for example, suitable for a rear tire for motorcycles. In this embodiment, no tie bar is provided in each axial groove 11 of the tread portion 2. Such a tread portion 2 exerts a great shear force on mud, resulting in an increase in traction during off-road running. In this embodiment, no tie bar is provided in each first axial groove 11A and each second axial groove 11B of the tread portion 2.

In addition, in this embodiment, a misalignment length WA in the tire axial direction between each first crown circumferential groove 12 and each second crown circumferential groove 13 of the tread portion 2 is preferably not less than 10% and further preferably not less than 20%, and is preferably not greater than 60% and further preferably not greater than 50%, of the groove width W2 of the first crown circumferential groove 12.

While particularly preferable embodiments of the present invention have been described above in detail, the present invention is not limited to the illustrated embodiments, and various modifications can be made to implement the present invention.

### EXAMPLES

Tires for motorcycles that have the basic patterns in FIGS. 1 and 6 were produced as test tires on the basis of specifications shown in Table 1. The test tires were tested in terms of on-road performance and off-road performance. A test method and common specifications for each test tire are as follows.
Tire size (FIG. 1): 120/70-16 (front tire)
Tire size (FIG. 6): 150/70-14 (rear tire)
Internal pressure: 200 kPa (front tire), 225 kPa (rear tire)

### <On-Road Performance and Off-Road Performance>

Each test tire was mounted on the front or rear wheel of a motorcycle described below. A test rider rode the motorcycle on a test course having a dry asphalt road surface and a muddy road surface. Sensory evaluation was made by the test rider for both performances. The results are indicated by scores. The higher the value is, the more excellent the performance is.
Motorcycle: engine displacement 500 cc

The results of the test are shown in Table 1.

It should be noted that "1.0TW" in Table 1 means that an axial groove extends between tread ends. In addition, "0.7TW" means that an axial groove has a length in the tire axial direction that is 70% of the tread development width, with the center of the axial groove located on the tire equator. Furthermore, "A" means that for a front tire, the front tire has the same specifications as those of FIG. 1, and for a rear tire, the rear tire has the same specifications as those of FIG. 6.

**Table 1**

| | Comp. Ex. 1 | Comp. Ex. 2 | Comp. Ex. 3 | Ex. 1 | Ex. 2 | Ex. 3 | Ex. 4 |
|---|---|---|---|---|---|---|---|
| Tire structure | Radial | Bias | Bias | Bias | Bias | Bias | Bias |
| Length in tire axial direction of axial groove | 1.0TW | 0.7TW | 1.0TW | 1.0TW | 1.0TW | 1.0TW | 1.0TW |
| Wc/TW (%) | 50 | 40 | 20 | 40 | 40 | 40 | 40 |
| Presence or absence of tie bar | A | A | A | None | A | A | A |
| WA/W2 (%) | A | A | A | A | 0 | A | A |
| W1/L1n (%) | 47 | 38 | 38 | 38 | 38 | 60 | 38 |
| On-road performance | 100 | 100 | 90 | 105 | 105 | 105 | 110 |
| [Higher score is better] | | | | | | | |
| Off-road performance [Higher score is better] | 100 | 90 | 100 | 110 | 110 | 100 | 100 |

As a result of the test, it is confirmed that the tires of the examples have an improvement in on-road performance and off-road performance compared to the tires of the comparative examples.

### [Additional Note]

The present invention includes the following aspects.

### [Present Invention 1]

A tire for motorcycles comprising a tread portion and a carcass having a bias structure, wherein
the carcass includes at least two carcass plies,
the two carcass plies each include a plurality of carcass cords inclined at an angle of not less than 20 degrees and less than 70 degrees with respect to a tire circumferential direction,
the carcass cords of the two carcass plies are inclined in opposite directions,
the tread portion includes a plurality of axial grooves extending between tread ends on both sides, and crown blocks each formed between the axial grooves adjacent in the tire circumferential direction, and
a length in a tire axial direction of each crown block is not less than 30% of a tread development width.

### [Present Invention 2]

The tire for motorcycles according to Present Invention 1, wherein a ratio (f/C) of a length f in a tire radial direction between a tire maximum width position and an outer end in the tire radial direction of the tire to a tire cross-sectional width C is not less than 0.25.

### [Present Invention 3]

The tire for motorcycles according to Present Invention 1 or 2, wherein the tread portion has a sea/land ratio of 15% to 50%.

### [Present Invention 4]

The tire for motorcycles according to any of Present Inventions 1 to 3, wherein the plurality of axial grooves each include a tie bar that is a raised portion of a groove bottom.

### [Present Invention 5]

The tire for motorcycles according to Present Invention 4, wherein a raised height of the tie bar is not less than 10% of a groove depth of the axial groove.

### [Present Invention 6]

The tire for motorcycles according to Present Invention 4 or 5, wherein
the crown blocks include a first crown block, and a second crown block that is adjacent to the first crown block in the tire circumferential direction and has a larger length in the tire axial direction than the first crown block,
the tread portion includes a first crown circumferential groove demarcating the first crown block, and a second crown circumferential groove demarcating the second crown block, and
the tie bar is located outward in the tire axial direction of the first crown circumferential groove.

### [Present Invention 7]

The tire for motorcycles according to Present Invention 6, wherein the tie bar is connected to the second crown circumferential groove.

### [Present Invention 8]

The tire for motorcycles according to Present Invention 6 or 7, wherein the first crown circumferential groove extends in the shape of an arc that is convex inward in the tire axial direction.

### [Present Invention 9]

The tire for motorcycles according to any of Present Inventions 6 to 8, wherein the first crown circumferential groove and the second crown circumferential groove are misaligned in the tire axial direction.

### [Present Invention 10]

The tire for motorcycles according to any of Present Inventions 6 to 9, wherein a misalignment length in the tire axial direction between the first crown circumferential groove and the second crown circumferential groove is not less than 10% of a groove width of the first crown circumferential groove.

### [Present Invention 11]

The tire for motorcycles according to any of Present Inventions 6 to 10, wherein the groove width of the first crown circumferential groove and a groove width of the second crown circumferential groove are not greater than 15% of the tread development width.

### [Present Invention 12]

The tire for motorcycles according to any of Present Inventions 1 to 11, wherein
the tread portion includes land portions each demarcated by the axial grooves adjacent in the tire circumferential direction, and
a groove width of each axial groove is not greater than 50% of a length in the tire circumferential direction of the land portion.

### [Present Invention 13]

The tire for motorcycles according to Present Invention 12, wherein
the land portions include a first land portion having a length in the tire circumferential direction that increases from a tire equator toward the tread ends on both sides, and a second land portion having a length in the tire circumferential direction that decreases from the tire equator toward the tread ends on both sides, and
a smallest value of the length in the tire circumferential direction of the first land portion on the tire equator is smaller than a smallest value of the length in the tire circumferential direction of the second land portion.

## Claims

1. A tire (1) for motorcycles comprising a tread portion (2) and a carcass (6) having a bias structure, wherein
the carcass (6) includes at least two carcass plies (6A, 6B),
the two carcass plies (6A, 6B) each include a plurality of carcass cords (6c) inclined at an angle of not less than 20 degrees and less than 70 degrees with respect to a tire circumferential direction,
the carcass cords (6c) of the two carcass plies (6A, 6B) are inclined in opposite directions,
the tread portion (2) includes a plurality of axial grooves (11) extending between tread ends (Te) on both sides, and crown blocks (15) each formed between the axial grooves (11) adjacent in the tire circumferential direction, and
a length (Wc) in a tire axial direction of each crown block (15) is not less than 30% of a tread development width (TW).

2. The tire (1) for motorcycles according to claim 1, wherein a ratio (f/C) of a length f in a tire radial direction between a tire maximum width position (M) and an outer end (1e) in the tire radial direction of the tire (1) to a tire cross-sectional width C is not less than 0.25.

3. The tire (1) for motorcycles according to claim 1 or 2, wherein the tread portion (2) has a sea/land ratio (S/L) of 15% to 50%.

4. The tire (1) for motorcycles according to any of claims 1 to 3, wherein the plurality of axial grooves (11) each include a tie bar (21) that is a raised portion of a groove bottom (11d).

5. The tire (1) for motorcycles according to claim 4, wherein a raised height (Ha) of the tie bar (21) is not less than 10% of a groove depth (d1) of the axial groove (11).

6. The tire (1) for motorcycles according to claim 4 or 5, wherein
the crown blocks (15) include a first crown block (16), and a second crown block (17) that is adjacent to the first crown block (16) in the tire circumferential direction and has a larger length in the tire axial direction than the first crown block (16),
the tread portion (2) includes a first crown circumferential groove (12) demarcating the first crown block (16), and a second crown circumferential groove (13) demarcating the second crown block (17), and
the tie bar (21) is located outward in the tire axial direction of the first crown circumferential groove (12).

7. The tire (1) for motorcycles according to claim 6, wherein the tie bar (21) is connected to the second crown circumferential groove (13).

8. The tire (1) for motorcycles according to claim 6 or 7, wherein the first crown circumferential groove (12) extends in the shape of an arc that is convex inward in the tire axial direction.

9. The tire (1) for motorcycles according to any one of claims 6 to 8, wherein the first crown circumferential groove (12) and the second crown circumferential groove (13) are misaligned in the tire axial direction.

10. The tire (1) for motorcycles according to any one of claims 6 to 8, wherein a misalignment length (WA) in the tire axial direction between the first crown circumferential groove (12) and the second crown circumferential groove (13) is not less than 10% of a groove width (W2) of the first crown circumferential groove (12).

11. The tire (1) for motorcycles according to any one of claims 6 to 10, wherein the groove width (W2) of the first crown circumferential groove (12) and a groove width (W3) of the second crown circumferential groove (13) are not greater than 15% of the tread development width (TW).

12. The tire (1) for motorcycles according to any of claims 1 to 11, wherein
the tread portion (2) includes land portions (10) each demarcated by the axial grooves (11) adjacent in the tire circumferential direction, and
a groove width (W1) of each axial groove (11) is not greater than 50% of a length in the tire circumferential direction of the land portion (10).

13. The tire (1) for motorcycles according to claim 12, wherein
the land portions (10) include a first land portion (10A) having a length (L1) in the tire circumferential direction that increases from a tire equator (Co) toward the tread ends (Te) on both sides, and a second land portion (10B) having a length (L2) in the tire circumferential direction that decreases from the tire equator (Co) toward the tread ends (Te) on both sides, and
a smallest value (Lf) of the length (L1) in the tire circumferential direction of the first land portion (10A) on the tire equator (Co) is smaller than a smallest value (Lh) of the length (L2) in the tire circumferential direction of the second land portion (10B).
